# EUROPÄISCHE PATENTANMELDUNG

(11) **EP 1 775 447 A2**
(43) Veröffentlichungstag der Anmeldung: **18.04.2007**
(21) Anmeldenummer: 06121617.2
(22) Anmeldetag: 02.10.2006
(51) Int. Cl.: F02D 13/02, F02D 41/14, F02D 41/10

(54) **Verfahren zur Optimierung einer Ventilhubumschaltung bei Ottomotoren**

(30) Priorität: 11.10.2005 DE 102005048704
(71) Anmelder: SIEMENS AKTIENGESELLSCHAFT, 80333 München (DE)
(72) Erfinder: Bauer, Erwin, 93138, Lappersdorf (DE); Ellmer, Dietmar, 93059, Regensburg (DE)

(57) **Zusammenfassung**

Die vorliegende Erfindung beschreibt ein Verfahren zur Optimierung einer Ventilhubumschaltung bei Ottomotoren mit Lambda-Regelung. Basierend auf der Auswertung eines Beschleunigungsverlaufs und eines Lambda-Verlaufs während der Ventilhubumschaltung wird erkannt, ob zu korrigierende Zylinderfüllungsfehler und/oder Drehmomentenfehler des Ottomotors vorliegen.

## Beschreibung

Die vorliegende Erfindung betrifft ein Verfahren zur Optimierung einer Ventilhubumschaltung bei Ottomotoren mit Lambda-Regelung

Das Prinzip der Ventilhubumschaltung bei Verbrennungsmotoren ist im Stand der Technik bekannt. So sind Systeme, wie beispielsweise das Vario-Cam-Plus der Firma Porsche, seit einigen Jahren bereits in der Serienfertigung (siehe auch "Handbuch Verbrennungsmotor, Herausgeber: van Basshuysen/Schäfer, Vieweg Verlag, 1. Auflage 2002, Kapitel 10.4.

Problematisch bei dieser Technik ist nach wie vor der Hubumschaltprozess als solcher. Gerade der Wechsel von kleinem zu großem Ventilhub bereitet Schwierigkeiten in Bezug auf die Momentenneutralität der Brennkraftmaschine. Im Vergleich dazu kann das Umschalten von großem zu kleinem Ventilhub bevorzugt in Schubabschaltphasen erfolgen und ist daher eher unkritisch für die Neutralität des Drehmoments.

Die Ventilhubumschaltung führt häufig zu einem spürbaren Ruckeln des Kraftfahrzeugs. Der Grund hierfür liegt in kaum vermeidbaren Ungenauigkeiten im Schluck- oder Liefergradmodell (Saugrohrmodell). Diese Modelle berechnen in der Motorsteuerung die jedem Zylinder zugeführte Luftmasse. Daraus wird unter Einhaltung eines bestimmten Luft/Kraftstoff-Verhältnisses (Lambda) die einzuspritzende Kraftstoffmenge berechnet. Die Kraftstoffmenge wiederum bestimmt das frei werdende Motordrehmoment des jeweiligen Arbeitsspiels.

Für jede Ventilhubkonfiguration der Brennkraftmaschine ist ein separates Modell in der Motorsteuerung hinterlegt. Die Modelldaten sind in Kennfeldern abgelegt, die von so genannten Stützstellen gebildet werden. Da die Bedatung dieser Kennfelder für eine Vielzahl von Fahrzeugen, beispielsweise aus der Serienfertigung, in der Regel identisch ist, spielt hier die Systemindividualität eine große Rolle. Bereits kleine Fertigungstoleranzen können dazu führen, dass sich zwei vermeintlich gleiche Systeme unterschiedlich verhalten.

Ein Maß für den Gütegrad der Ventilhubumschaltung ist der Vergleich des Drehmoments in beiden Ventilhubkonfigurationen - also direkt vor und direkt nach der Ventilhubumschaltung. Das Drehmoment bei den beiden Ventilhüben vor und nach der Ventilhubumschaltung sollte möglichst gleich sein. Bereits kleine Fehler in der Modellberechnung führen jedoch zu Momentenunterschieden und damit zu einem Ruckeln des Fahrzeugs bei der Ventilhubumschaltung. Zwar werden die Zylinderfüllungsmodelle in der Regel durch vorhandene Sensoren, beispielsweise Saugrohrdrucksensor, Luftmassenmesser usw., abgeglichen, aber auch diese Komponenten sind toleranzbehaftet, so dass kleine Ungenauigkeiten nicht auszuschließen sind.

An dieser Stelle öffnet sich die Schere Kosten-Genauigkeit. So kann zu einem reellen Preis nur ein Sensor mit einer begrenzten Genauigkeit entwickelt und gefertigt werden. Erschwerend kommt hinzu, dass sich durch die Ventilhubumschaltung in aller Regel das verbrennungstechnische Verhalten des Ottomotors ändert. Dies ist hauptsächlich bei Kanaleinspritzern aufgrund des veränderten Strömungsquerschnitts und der veränderten Strömungsverhältnisse am Ventil zu erwarten. Eine besondere Problematik ergibt sich dann, wenn im Zuge der Ventilhubumschaltung zusätzlich auch noch ein Brennverfahrenswechsel stattfindet. Dies wäre beispielsweise ein Wechsel von einer ottomotorischen Verbrennung zu einer kontrollierten Selbstzündung.

Prinzipiell können die Modelle in der Motorsteuerung beliebig genau umgesetzt werden. Der Nachteil dabei ist jedoch, die rasch zunehmende Komplexität der Datenverarbeitungsabläufe, die entsteht, wenn alle Einflussparameter auf eine abzubildende Größe mit einer bestimmten Genauigkeit erfasst werden soll. Selbst moderne Motorsteuerungen stoßen hier schnell an Grenzen. Insbesondere sind die Speicher- und Rechenkapazität der Motorsteuerung bald erschöpft, so dass letztendlich Kompromisse geschlossen und Abstriche bezüglich der Genauigkeit gemacht werden müssen. Ein ähnlicher Ansatz gilt für die im Ottomotor eingesetzte Sensorik, da Großserienprodukte nach kostengünstigen Bauteilen verlangen, bei denen eine bestimmte Messtoleranz in Kauf genommen wird.

Es ist daher das Problem der vorliegenden Erfindung, ein Verfahren zur Optimierung einer Ventilhubumschaltung bei Ottomotoren bereitzustellen, das sich durch Momentenneutralität des Ottomotors bei Ventilhubumschaltprozessen und durch eine wirtschaftliche Realisierbarkeit auszeichnet.

Das obige Problem wird durch ein Verfahren gemäß dem unabhängigen Patentanspruch 1 gelöst.

Bei diesem Verfahren wird systemindividuell die Umschaltungenauigkeit bei Ventilhubumschaltprozessen vermindert und die Qualität des Umschaltprozesses verbessert. Das erfindungsgemäße Verfahren greift sowohl bei Ungenauigkeiten, die aus dem Fertigungsprozess hervorgehen, während ebenfalls Langzeitveränderungen des Ottomotors erkannt werden und deren Einfluss minimiert wird. Vorteilhafte Ausgestaltungen und Weiterentwicklungen der vorliegenden Erfindung gehen aus der folgenden Beschreibung, der begleitenden Figur und den anhängenden Ansprüchen hervor.

Das erfindungsgemäße Verfahren zur Optimierung einer Ventilhubumschaltung bei Ottomotoren mit Lambda-Regelung weist die folgenden Schritte auf: Erfassen von Motorbetriebsdaten, vorzugsweise Drehmoment relevante Daten, während der Ventilhubumschaltung und Übermitteln der Betriebsdaten an eine Motorsteuerung, Auswerten eines Beschleunigungsverlaufs der Ventilhubumschaltung als ein Maß für einen Gütegrad der Ventilhubumschaltung und Auswerten eines Lambda-Verlaufs der Ventilhubumschaltung derart, dass bei Vorliegen einer Unstetigkeit im Beschleunigungsverlauf eine Berechnung einer Zylinderfüllung und/oder eine Berechnung eines Drehmoments korrigiert wird.

Das vorliegende Verfahren für Ottomotoren mit Lambda-Regelung stützt sich auf die meist standardmäßig erfassten Motorbetriebsdaten, die an die Motorsteuerung des Ottomotors übermittelt werden. Anhand dieser Motorbetriebsdaten kann ein "Ruckeln" des Kraftfahrzeugs während der Ventilhubumschaltung erkannt werden, da dieses "Ruckeln" eine Unstetigkeit im Beschleunigungsverlauf des Ottomotors als Ursache hat. Wertet man nun den Lambda-Verlauf während der Ventilhubumschaltung aus, können Rückschlüsse auf mögliche Fehler in der Berechnung der Zylinderfüllung des Ottomotors und/oder in der Berechnung des Drehmoments des Ottomotors gezogen werden. Die oben genannte Unstetigkeit im Beschleunigungsverlauf der Ventilhubumschaltung liefert ein Maß für den Gütegrad des Umschaltprozesses. Bleibt das Drehmoment des Ottomotors konstant, d.h. es tritt keine Unstetigkeit während der Ventilhubumschaltung auf, liegen keine Fehler in den Berechnungsmodellen der Motorsteuerung vor. Fällt die Unstetigkeit jedoch unterschiedlich stark aus im Vergleich zwischen verschiedenen Ventilhubumschaltprozessen, kann eine stufenförmige Einordnung des Gütegrads der Ventilhubumschaltung und somit der Fehler in der Zylinderfüllung und/oder im Drehmoment vorgenommen werden, um diese nachfolgend zu beheben.

Gemäß einer Ausführungsform erfolgt ein Auswerten einer Segmentzeit des Ottomotors basierend auf einem Kurbelwellensignal zum Erfassen der Unstetigkeit im Beschleunigungsverlauf als ein Maß für den Gütegrad der Ventilhubumschaltung. Dieser Schritt wird vorzugsweise dadurch ergänzt, dass anhand des Lambda-Verlaufs erkannt wird, ob ein Anfetten, Abmagern oder ein konstanter Lambda-Verlauf vorliegt. Wird in diesem Zusammenhang ein Anfetten oder Abmagern erkannt, liefert der Gütegrad einen Hinweis auf den Fehler bei der Berechnung der Zylinderfüllung. Erkennt man wiederum einen konstanten Lambda-Verlauf und stellt gleichzeitig eine Unstetigkeit im Beschleunigungsverlauf fest, weist dies auf einen Fehler bei der Berechnung des Drehmoments des Ottomotors hin. Nach Feststellen dieser Fehler oder einer Auswahl dieser Fehler erfolgt ein Berechnen einer korrigierten Zylinderfüllung und/oder eines korrigierten Drehmoments des Ottomotors.

Gemäß einer weiteren Ausgestaltung des vorliegenden Verfahrens werden die Motorbetriebsdaten der Ventilhubumschaltung sowie der korrigierten Zylinderfüllung und/oder des korrigierten Drehmoments als Korrekturwert in einer Datenbank abgelegt. Als eine Datenbank mit vergleichsweise geringem Datenverarbeitungsaufwand eignet sich beispielsweise ein Korrekturkennfeld zur Aufnahme obiger Werte. Innerhalb dieses Korrekturkennfelds wird bevorzugt ein Gültigkeitsbereich um den Korrekturwert definiert, der sich über eine Mehrzahl von Betriebszuständen des Ottomotors erstreckt. Werden überlappende Gültigkeitsbereiche von Korrekturwerten festgestellt, erfolgt ein gegenseitiges Plausibilisieren dieser Gültigkeitsbereiche. Im Rahmen dieses Vorgangs werden überlappende Gültigkeitsbereiche mit übereinstimmenden Korrekturwerten vereinigt, während überlappende Gültigkeitsbereiche mit nicht übereinstimmenden Korrekturwerten verkleinert werden, um eine Überlappung auszuschließen.

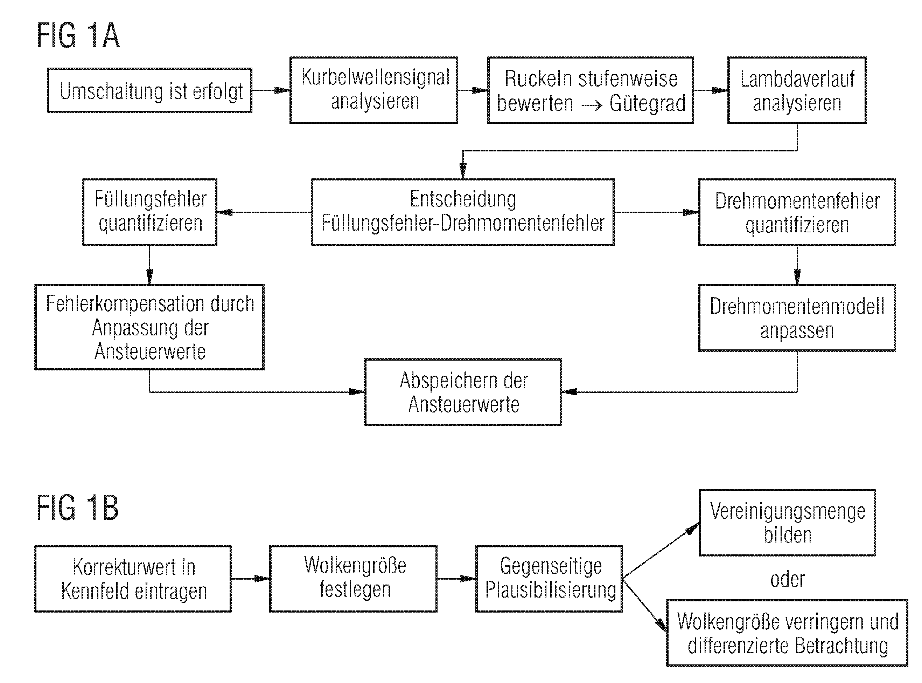

Bevorzugte Ausführungsformen der vorliegenden Erfindung werden unter Bezugnahme auf die begleitende Zeichnung näher erläutert. Die Figur zeigt ein Flussdiagramm für eine systemindividuelle Optimierung der Ventilhubumschaltung eines Ottomotors.

Bei heutigen Ottomotoren mit Lambda-Regelung erfolgt eine Ventilhubumschaltung zwischen zwei oder mehreren verschiedenen Einlass- und/oder Auslassventilhüben. Während der Ventilhubumschaltung zeichnet die Motorsteuerung alle Drehmoment relevanten Größen auf. Dies sind beispielsweise die Luftmasse MAF, der Saugrohrdruck MAP, der Lambda-Verlauf LAM, der Drehzahlverlauf CRK, der Drosselklappenwinkel TPS, der Zündwinkel IGA, die Ansauglufttemperatur TIA, die Kühlmitteltemperatur TCO, die Öltemperatur TOIL, der Einspritzverlauf TI, der Drehmomentenverlauf TQ, TQI, TQ_LOSS, die Nockenwellenstellung CAM_IN, CAM_EX und die Drallklappenstellung PORT_FLAP. Bevorzugt wird während der Ventilhubumschaltung das Kurbelwellensignal erfasst und ausgewertet, wie in dem Flussdiagramm im Teil A der Figur dargestellt ist. Gleichzeitig wird das gemessene Lambda ausgewertet. Im Verlauf der Auswertung erkennt die Motorsteuerung, ob durch die Ventilhubumschaltung ein Anfetten, Abmagern oder ein Konstantbleiben des Lambda-Werts des Ottomotors stattgefunden hat. Das Ergebnis der Auswertung steht dann der Motorsteuerung für das weitere Verfahren zur Verfügung.

Erfolgt der Ventilhubumschaltprozess nicht optimal, kommt es zum "Ruckeln" des Kraftfahrzeugs, welches von den Insassen als störend empfunden wird. Physikalisch gesehen ist "Ruckeln" eine Unstetigkeit im Beschleunigungsverlauf des Kraftfahrzeugs und kann als zeitliche Ableitung der Beschleunigung bei einem gegebenen Bewegungsablauf berechnet werden. Mess- und rechentechnisch ist dies im Fahrzeug jedoch nur mit hohem technischen Aufwand zu erfassen, so dass sich in der Praxis die Betrachtung des Kurbelwellensignals (CRK) anbietet. Aus dem an die Motorsteuerung übermittelten Kurbelwellensignal kann die jeweilige Segmentzeit bzw. Dauer eines Arbeitsspiels des Ottomotors bestimmt werden, aus denen der Beschleunigungsverlauf ermittelbar ist.

Um nun die Ventilhubumschaltung bewerten zu können, werden die aus dem Kurbelwellensignal bestimmten Segmentzeiten analysiert, bewertet und daraus ein Gütegrad der Ventilhubumschaltung abgeleitet. Ein Maß für den Gütegrad der Ventilhubumschaltung ist die obige Unstetigkeit im Beschleunigungsverlauf zum Zeitpunkt der Ventilhubumschaltung. Die Unstetigkeit im Beschleunigungsverlauf bzw. der Gütegrad der Ventilhubumschaltung wird basierend auf bekannten Fuzzy-Regeln stufenförmig eingeteilt. Die Kategorien der Einteilung können wie folgt gewählt werden, während jedoch auch andere Einteilungen denkbar sind: 1 = kein Ruckeln, 2 = leichtes Ruckeln, 3 = starkes Ruckeln, 4 = unzumutbares Ruckeln.

Das Ergebnis der Auswertung des Beschleunigungsverlaufs während der Ventilhubumschaltung wird dann im Zusammenhang mit dem erfassten Lambda-Verlauf ausgewertet. Unter der Voraussetzung, dass während der Ventilhubumschaltung ein plausibler Lambda-Verlauf zu beobachten war, kann der Gütegrad der Umschaltung als Maß für einen vorhandenen Fehler bei der Berechnung der Zylinderfüllung herangezogen werden. Als plausibler Lambda-Verlauf zählt während der Ventilhubumschaltung ein Abmagern oder ein Anfetten des Gemischs. Wurde auf diese Weise ein Füllungsfehler erkannt (vgl. Figur, Teil A), wird im nächsten Schritt der Vorsteuerwert für die Zylinderfüllung (MAF_SP = Setpoint der Zylinderfüllung) korrigiert und somit angepasst.

Die Korrektur bzw. Anpassung der Zylinderfüllungswerte erfolgt hinsichtlich mehrerer Kriterien und bevorzugt stufenweise. Diese Kriterien sind beispielsweise der Gütegrad der Ventilhubumschaltung und der Lambda-Verlauf während der Ventilhubumschaltung. In diesem Zusammenhang ist ein Abmagern bzw. Anfetten ein Indiz für zu viel bzw. zu wenig Zylinderfüllung. Ein weiteres Kriterium ist die Abschätzung des Handlungsbedarfs für einen Regeleingriff durch die Motorsteuerung. In diesem Zusammenhang ist zu beantworten, ob der Fehler so groß war, dass akut Abhilfe geschaffen werden muss. War nur ein leichtes "Ruckeln" zu verspüren, kann eine weitere Ventilhubumschaltung in diesem Kennfeldbereich abgewartet werden, um Entscheidungssicherheit zu erlangen. Ein weiteres Kriterium ist auf den Wirkungsbereich der Adaption gerichtet, d.h. in welchem Kennfeldbereich die Korrektur greifen soll. Zudem ist zu beurteilen, in welcher Relation die obige Korrektur zum Betriebspunkt des Ottomotors steht, z.B. ΔMAF/MAF mit ΔMAF = Füllungsfehler.

Wurde der Zylinderfüllungsfehler erkannt, kann er durch verschiedene Stellgrößen kompensierend beeinflusst werden. Hauptstellorgan ist in diesem Zusammenhang die Drosselklappe während auch durch das Verstellen der Ladungswechselsteuerzeiten, beispielsweise durch Nockenwellenphasensteller in Form von besonders schnellen elektrischen Stellern, die Zylinderfüllung beeinflussbar ist.

Zeigt der Lambda-Verlauf während der Ventilhubumschaltphase keine Hinweise auf ein Anfetten oder Abmagern, liegt ein Fehler im Drehmomentenmodell (TQI_SP = Drehmomentsetpoint) vor. In diesem Fall ist der Drehmomentsetpoint TQI_SP um ein bestimmtes Maß ΔTQI zu korrigieren und zu adaptieren. In ähnlicher Weise wie bei der oben beschriebenen Korrektur der Zylinderfüllung werden bei der Korrektur im Drehmomentenmodell ebenfalls verschiedene Kriterien angewandt, um ein bevorzugt stufenweises Quantifizieren des Drehmomentenfehlers durchzuführen. Diese Kriterien umfassen den Gütegrad der Ventilhubumschaltung, die Abschätzung des Handlungsbedarfs für eine Korrektur, den Wirkungsbereich der Adaption und das Verhältnis zum Betriebspunkt ΔTQI/TQI. Neben der Umsetzung der ermittelten Korrekturwerte für die Zylinderfüllung und das Drehmomentmodell durch die Motorsteuerung werden diese Korrekturwerte zusammen mit den oben genannten Betriebsgrößen des Ottomotors in einer Datenbank abgespeichert. Diese Datenbank enthält auf dieser Grundlage die Betriebsbedingungen der Ventilhubumschaltung und die entsprechend ermittelte Korrektur für Zylinderfüllung und Drehmomentenmodell, so dass auf dieser Datengrundlage der Betrieb des Ottomotors weiter optimiert wird. Vorzugsweise wird die Datenbank durch ein Korrekturkennfeld gebildet. Diesem Korrekturkennfeld mit den neuen Vorsteuerwerten bzw. Korrekturwerten in Zusammenhang mit den jeweiligen Umschaltbedingungen können dann beim nächsten Ventilumschaltvorgang die erforderlichen Motorbetriebsgrößen entnommen werden.

Da Datenbanken in Motorsteuerungen nur unter großem Aufwand zu realisieren sind, wird ein Speichern und gegenseitiges Plausibilisieren der Korrekturwerte bzw. Adaptionswerte auf der Grundlage von Fuzzy-Regeln durchgeführt. Zunächst wird der relevante Ventilumschaltbereich umrissen, d.h. der Bereich abgesteckt, in dem eine Ventilhubumschaltung überhaupt nur stattfinden kann. Die maßgebliche Größe ist hier das Drehmoment TQI. Wird für einen Ventilumschaltvorgang ein Korrekturwert entsprechend der obigen Beschreibung ermittelt, wird der Wert in das Korrekturkennfeld an seinem durch die Betriebsdaten des Ottomotors festgelegten Betriebspunktplatz eingetragen. Darüber hinaus wird ein Gültigkeitsbereich, vorzugsweise ein kreisförmiger Bereich, der auch als Wolke bezeichnet wird, definiert, indem der Korrekturwert ebenso Gültigkeit hat. Dieser Gültigkeitsbereich erstreckt sich über eine Mehrzahl von Betriebszuständen des Ottomotors, die durch die obigen Größen charakterisiert werden. Finden Ventilumschaltvorgänge im unmittelbaren Nachbarbereich des Betriebspunkts des zuvor ermittelten Korrekturwerts statt, wird aufgrund des definierten Gültigkeitsbereichs mit dem gleichen Korrekturwert für Zylinderfüllung und Drehmoment gearbeitet.

Mit zunehmender Betriebszeit steigt die Zahl der im obigen Korrekturkennfeld nicht flüchtig gespeicherten Korrekturwerte mit den entsprechend definierten Gültigkeitsbereichen. Aufgrund der Mehrzahl von Korrekturwerten und Gültigkeitsbereichen bzw. Wolken stoßen Wolkengrenzen aneinander, d.h. es bilden sich Schnittmengen zwischen den Wolken unterschiedlicher Korrekturwerte. Bilden sich derartige Schnittmengen aus, muss ein gegenseitiges Plausibilisieren der sich überlappenden Gültigkeitsbereiche unterschiedlicher Korrekturwerte erfolgen. Ergibt das gegenseitige Plausibilisieren, dass die im Korrekturkennfeld abgespeicherten Korrekturwerte übereinstimmen, werden die Gültigkeitsbereiche zu einem gemeinsamen Bereich bzw. einer gemeinsamen Wolke zusammengefasst. Es wird somit eine Vereinigungsmenge dieser Gültigkeitsbereiche gebildet. Stimmen die Korrekturwerte der sich überlappenden Gültigkeitsbereiche nicht überein, wird die Wolkengröße beider betrachteter Wolken bzw. Gültigkeitsbereiche so weit verkleinert, bis keine Überlappung mehr vorliegt. Auf diese Weise wird der betroffene Bereich bei weiteren Ventilumschaltvorgängen differenzierter betrachtet. Die Größe der Gültigkeitsbereiche bzw. Wolken wird nach den oben genannten Kriterien der Korrekturwertbestimmung definiert.

Der Hauptvorteil des Verfahrens besteht darin, dass systemindividuelle Unzulänglichkeiten bei der Ventilhubumschaltung erkannt und behoben werden. Dabei wird zwischen Zylinderfüllungsfehlern und Drehmomentmodellfehlern unterschieden. Eine momentenneutrale und ruckfreie Ventilhubumschaltung wird dauerhaft in allen Ventilhubumschaltbereichen erreicht, was letztlich der Komfortsteigerung des Kraftfahrzeugs dient. Durch die nicht flüchtige Speicherung der Korrektur- oder Adaptionswerte wird bei diesem Adaptionsverfahren eine bestimmte Umschaltperformance garantiert, die unabhängig von der Vorgeschichte des Motors über die gesamte Fahrzeuglebensdauer vorhält. Außerdem werden bereits in Korrekturkennfeld vorhandene Werte bei Alterungserscheinungen des Motors angepasst und sind daher ständig auf dem neuesten Stand.

## Patentansprüche

1. Verfahren zur Optimierung einer Ventilhubumschaltung bei Ottomotoren mit Lambdaregelung, das die folgenden Schritte umfasst:
a. Erfassen von Motorbetriebsdaten, vorzugsweise drehmomentrelevante Daten, während der Ventilhubumschaltung und Übermitteln der Betriebsdaten an eine Motorsteuerung,
b. Auswerten eines Beschleunigungsverlaufs der Ventilhubumschaltung als ein Maß für einen Gütegrad der Ventilhubumschaltung,
c. Auswerten eines Lambdaverlaufs der Ventilhubumschaltung derart, dass bei Vorliegen einer Unstetigkeit im Beschleunigungsverlauf eine Berechnung einer Zylinderfüllung und/oder eine Berechnung eines Drehmoments korrigiert wird.

2. Verfahren gemäß Anspruch 1, mit dem weiteren Schritt:
Auswerten einer Segmentzeit basierend auf einem Kurbelwellensignal zum Erfassen der Unstetigkeit im Beschleunigungsverlauf als ein Maß für den Gütegrad der Ventilhubumschaltung.

3. Verfahren gemäß Anspruch 1 oder 2, mit dem weiteren Schritt:
Erkennen anhand des Lambdaverlaufs, ob ein Anfetten,
Abmagern oder ein konstanter Lambdaverlauf vorliegt.

4. Verfahren gemäß Anspruch 3, mit dem weiteren Schritt.
Anwenden des Gütegrads der Ventilhubumschaltung als ein Maß für einen Fehler bei der Berechnung der Zylinderfüllung, wenn das Anfetten oder Abmagern erkannt worden ist, und Berechnen einer korrigierten Zylinderfüllung.

5. Verfahren gemäß Anspruch 3 oder 4, mit dem weiteren Schritt:
Anwenden des Gütegrads der Ventilhubumschaltung als ein Maß für einen Fehler bei der Berechnung des Drehmoments, wenn der konstante Lambdaverlauf erkannt worden ist, und Berechnen eines korrigierten Drehmoments.

6. Verfahren gemäß Anspruch 4 oder 5, mit dem weiteren Schritt:
Ablegen der Motorbetriebsdaten der Ventilhubumschaltung sowie der korrigierten Zylinderfüllung und/oder des korrigierten Drehmoments als Korrekturwert in einer Datenbank, vorzugsweise in einem Korrekturkennfeld.

7. Verfahren gemäß Anspruch 6, mit dem weiteren Schritt:
Definieren eines Gültigkeitsbereichs um den Korrekturwert im Korrekturkennfeld, der sich über eine Mehrzahl von Betriebszuständen des Ottomotors erstreckt.

8. Verfahren gemäß Anspruch 7, mit dem weiteren Schritt:
gegenseitiges Plausibilisieren überlappender Gültigkeitsbereiche derart, dass bei übereinstimmenden Korrekturwerten überlappender Gültigkeitsbereiche diese Gültigkeitsbereiche vereinigt werden und dass bei nicht übereinstimmenden Korrekturwerten zum Ausschließen einer Überlappung die Gültigkeitsbereiche verkleinert werden.
